# EUROPÄISCHE PATENTSCHRIFT

(11) **EP 2 167 844 B1**
(45) Veröffentlichungstag und Bekanntmachung des Hinweises auf die Patenterteilung: **15.08.2012**
(21) Anmeldenummer: 08759025.3
(22) Anmeldetag: 04.06.2008
(51) Int. Cl.: F16H 55/17

(54) **VERFAHREN ZUR HERSTELLUNG EINES GETRIEBES UND GETRIEBE-BAUREIHE**
METHOD FOR THE PRODUCTION OF A TRANSMISSION AND TRANSMISSION LINE
PROCEDE DE PRODUCTION D'UNE TRANSMISSION ET GAMME DE TRANSMISSIONS CORRESPONDANTE

(30) Priorität: 20.07.2007 DE 102007034449
(43) Veröffentlichungstag der Anmeldung: 31.03.2010
(73) Patentinhaber: SEW-EURODRIVE GmbH & Co. KG, 76646 Bruchsal (DE)
(72) Erfinder: BÜHN, Oliver, 76703 Kraichtal (DE); MEGERLE, Jürgen, 76694 Forst (DE); HOLDERBACH, Thomas, 76149 Karlsruhe (DE); HAUG, Michael, 75015 Bretten (DE)
(86) Internationale Anmeldenummer: PCT/EP2008/004470
(87) Internationale Veröffentlichungsnummer: WO 2009/012841

(56) Entgegenhaltungen:
- WO-A-01/71220
- DE-A1- 2 256 753
- JP-A- 60 088 246
- FISK D H: "UNIVERSAL POWDER METAL PULLEY INSERT FOR LOW QUANTITIES USAGE" XEROX DISCLOSURE JOURNAL, XEROX CORPORATION. STAMFORD, CONN, US, Bd. 24, Nr. 2, 1. März 1999 (1999-03-01), Seiten 101-103, XP000935263

## Beschreibung

Die Erfindung betrifft ein Verfahren zur Herstellung eines Getriebes und eine GetriebeBaureihe.

Aus der DE 103 32 222 A1 ist eine Getriebe-Baureihe bekannt, wobei die Getriebebaureihe mindestens zwei Varianten eines Getriebes umfasst, wobei jede Variante zumindest eine Stirnradgetriebestufe umfasst, die ein erstes und ein zweites Stirnrad mit Achsabstand a umfasst.

Aus der DE 103 32 222 A1 ist weiter ein Verfahren zur Fertigung eines Getriebes bekannt, bei dem zur Spieleinstellung Schrauben zur Verbindung der Gehäuseteile des Getriebes derart angezogen werden, dass eine zwischen den Gehäuseteilen vorgesehene Dichtung komprimiert wird, aber die Schrauben noch nicht vollständig angezogen werden, ein erstes und zweites Gehäuseteil um einen innerhalb einer runden Ausnehmung gebildeten Drehpunkt derart gedreht werden, dass das Spiel verschwindet, danach ein erstes und zweites Gehäuseteil um den Drehpunkt um einen definierten Winkelbetrag derart zurückgedreht werden, dass ein definiertes Spiel vorgesehen ist, und dass danach die Schrauben vollständig angezogen werden.

Aus der DE 1 526 171 A ist eine Anordnung zum Anbau eines Motors an ein Getriebe bekannt, bei der ein Aufsteckzapfen zur separaten Aufnahme eines Ritzels ausgebildet ist.

Aus der DE 101 12 941 A1 ist ein Bausatz für eine Baureihe von Getriebemotoren bekannt, bei der bei einer Untermenge von Varianten das A-seitige Motorlagerschild abtriebsseitig eine Schnittstelle derart aufweist, dass ein querkraftfreies Getriebe oder ein nichtquerkraftfreie Getriebe direkt verbindbar ist, wobei die Motorwelle abtriebsseitig mit einem Ritzel verbunden ist und das direkte Verbinden derart erfolgt, dass das Ritzel als eintreibendes Verzahnungsteil des Getriebes vorgesehen ist.

Aus der JP 60 088246 A welche als der nächste Stand der technik betrachtst wird sind zwei Getriebe mit übereinstimmendem Getriebegehäuse bekannt, wobei bei einem Getriebe eine Zwischenwelle des anderen Getriebes als Abtriebswelle verwendet wird und wobei bei dem anderen Getriebe die Verzahnungsbreite der Getriebestufe zwischen der Zwischenwelle und der Abtriebswelle des anderen Getriebes beidseitig verbreitert ausgeführt ist.

Der Erfindung liegt die Aufgabe zugrunde, eine Getriebe-Baureihe und ein Verfahren zur Herstellung eines Getriebes derart weiterzubilden, dass die Herstellungskosten verringert sind.

Erfindungsgemäß wird die Aufgabe bei dem Verfahren zur Herstellung eines Getriebes nach den in Anspruch 1 oder 2 und bei der Getriebe-Baureihe nach den in Anspruch 6, 7, 8 oder 9 angegebenen Merkmalen gelöst.

Wichtige Merkmale der Erfindung eines Verfahrens zur Herstellung eines Getriebes sind, dass verschiedene Getriebe-Varianten gebildet werden, indem verschiedene Zahnrad-Varianten auf eine für alle Varianten gleiche Welle gesteckt werden, wobei die Zahnräder mit einer für alle Varianten gleichen Nabenbreite gefertigt werden, wobei
- eine erste Zahnrad-Variante aus einem Grundkörper mit einer ersten Breite gefertigt wird, bei der die Verzahnungsbreite gleich der ersten Breite ist und im Nabenbereich die Nabenbreite gegenüber der ersten Breite an einer Seitenfläche auf ein erstes Maß zurückgenommen wird
- und eine weitere Zahnrad-Variante aus einem Grundkörper mit einer weiteren Breite gefertigt wird, wobei die weitere Breite gleich der Nabenbreite ist und im Verzahnungsbereich die Verzahnungsbreite gegenüber der weiteren Breite an einer Seitenfläche zurückgenommen wird auf die Verzahnungsbreite der Getriebestufe der Getriebe-Variante, die die Zahnrad-Variante umfasst,
oder
- eine erste Zahnrad-Variante aus einem Grundkörper mit einer ersten Breite gefertigt wird, bei der die Verzahnungsbreite gleich der ersten Breite ist und im Nabenbereich die Nabenbreite gegenüber der ersten Breite an einer Seitenfläche auf ein erstes Maß zurückgenommen wird
- eine zweite Zahnrad-Variante aus einem Grundkörper mit einer zweiten Breite gefertigt wird, wobei die zweite Breite gleich der Nabenbreite und der Verzahnungsbreite ist,
- eine dritte Zahnrad-Variante aus einem Grundkörper mit einer dritten Breite gefertigt wird, wobei die dritte Breite gleich der Nabenbreite ist und im Verzahnungsbereich die Verzahnungsbreite gegenüber der dritten Breite an einer Seitenfläche zurückgenommen wird auf die Verzahnungsbreite der Getriebestufe der Getriebe-Variante, die die Zahnrad-Variante umfasst.

Vorzugsweise ist/sind die weitere Breite und/oder die zweite Breite und/oder die dritte Breite gleich dem ersten Maß.

Somit ist ein Fertigungsverfahren angegeben, bei dem Einzelteile in verschiedenen Varianten wiederverwendbar sind. Unter Wiederverwendung wird in dieser Schrift die Verwendbarkeit ein und desselben Bauteils in unterschiedlichen Varianten verstanden. Unter Breite wird in dieser Schrift das Maß für eine axiale Erstreckung eines im Wesentlichen rotationssymmetrischen Teils verstanden. Die Ausbildung einer einheitlichen Nabenbreite an den Zahnrädern schafft eine mechanische Schnittstelle zur Verbindung mit einer Welle, die unverändert bleibt, wenn das Zahnrad konstruktiv verändert wird, beispielsweise durch Änderung der Zähnezahl, der Verzahnungsform, der Verzahnungsbreite. Mechanische Schnittstellen bewirken einen modularen Aufbau der Getriebe, was wiederum die beschriebene Wiederverwendbarkeit von Einzelteilen nach sich zieht.

Bei einer vorteilhaften Ausgestaltung wird das erste Maß derart festgelegt, dass es höchstens 5% vom arithmetischen Mittel der Verzahnungsbreiten der Zahnrad-Varianten abweicht. Somit ist eine einfach handhabbare Formel gegeben, mit der eine vorteilhafte Nabenbreite als Referenznabenbreite festlegbar ist. Eine derartige Formel berücksichtigt insbesondere den Materialeinsatz für die Zahnräder, die Fertigungskosten beim Ausformen der Rücksprünge, die Belastbarkeit der einzelnen Varianten und Fertigungstoleranzen. Es wird somit zunächst eine Liste der benötigten Verzahnungsbreiten erstellt, das arithmetische Mittel bestimmt und geprüft, ob eine benötigte Verzahnungsbreite nahe an diesem arithmetischen Mittel liegt. Diese Verzahnungsbreite wird sodann vorzugsweise als die Referenznabenbreite ausgewählt. Vorzugweise wird die Stückzahlverteilung bei den einzelnen Varianten berücksichtigt, so dass die letztendlich gewählte Referenznabenbreite vom arithmetischen Mittel abweichen kann. Besonders vorzugsweise wird als Referenznabenbreite die Verzahnungsbreite desjenigen Zahnrads gewählt, das mit der größten Stückzahl gefertigt wird, um so den zusätzlichen Fertigungsschritt, die Ausbildung des Rücksprungs, in diesem Fall einzusparen.

Bei einer vorteilhaften Ausgestaltung wird die gefertigte Zahnrad-Variante auf eine einheitliche Welle bis zu einer Schulter der Welle aufgesteckt und/oder es wird nach Aufstecken der gefertigten Zahnrad-Variante eine einheitliche Distanzhülse auf die Welle aufgesteckt. Somit sind zumindest Welle und/oder Distanzhülse wiederverwendbar und die Lagerhaltung für den Getriebe-Baukasten ist reduziert. Die Varianten sind somit in räumlich weit von Fertigungswerken entfernten Montagewerken montierbar, wobei die Logistik zwischen Fertigungswerken, in denen die Bauteile des Baukastens gefertigt werden, und den Montagewerken, erheblich vereinfacht ist. Es verkürzen sich somit auch die Lieferzeiten.

Wichtige Merkmale der Erfindung einer Getriebe-Baureihe sind **in den Ansprüchen 6, 7, 8 und 9 angegeben.**

**Es kann vorgesehen sein,** dass die Varianten der Baureihe ein für alle Varianten gleiches Gehäuse umfassen, wobei jede Variante zumindest durch eine Welleneinheit gekennzeichnet ist, die an einer für alle Varianten gleichen Position im Gehäuse angeordnet ist, wobei in einer ersten Variante die Welleneinheit ein Zahnrad umfasst, dessen Nabenbreite gegenüber der Verzahnungsbreite auf ein erstes Maß zurückgenommen ist, und in einer weiteren Variante die Welleneinheit ein Zahnrad umfasst, dessen Verzahnungsbreite gegenüber der Nabenbreite auf ein zweites Maß zurückgenommen ist, und wobei bei der ersten und der weiteren Variante jeweils eine Seitenfläche des Zahnrads der Welleneinheit im Wesentlichen plan ausgebildet ist, wobei das Zahnrad mit dieser Seitenfläche bezüglich des Gehäuses bei allen Varianten gleich orientiert und/oder angeordnet ist. Es wird also eine Getriebe-Baureihe gebildet, deren Varianten unterschiedliche Gesamt-Übersetzungszahlen und/oder unterschiedliche Abtriebsmomente aufweisen, wobei bei mindestens einer Welleneinheit mindestens einer Getriebestufe mindestens ein Zahnrad austauschbar ist zur Variation der genannten Kenngrößen. Die Nabenbreite, die bei den verschiedenen Varianten gleich ist, ist kleiner als die größte vorgesehene Verzahnungsbreite. Somit sind die Zahnräder mit gegenüber dem Maximalwert verringerter Verzahnungsbreite aus Grundkörpern mit verringerter Gesamtbreite fertigbar. Dies spart Material und reduziert die Herstellungskosten.

Alternativ oder zusätzlich umfasst bei einer vorteilhaften Ausgestaltung einer GetriebeBaureihe in einer weiteren Variante die Welleneinheit ein Zahnrad, dessen Seitenflächen im Wesentlichen plan ausgebildet sind. Die Getriebe-Baureihe umfasst dann also mindestens eine Variante, bei der keine Rücksprünge eingebracht sind. Somit ist bei der Fertigung mindestens einer Variante ein Bearbeitungsschritt und somit eine Mehrzahl von Fertigungsschritten einsparbar. Hierdurch sind die Herstellungskosten nochmals reduziert. Vorzugsweise ist das Zahnrad ohne Rücksprung, also das Normrad, dasjenige mit der größten Stückzahl.

Alternativ oder zusätzlich umfasst bei einer vorteilhaften Ausgestaltung einer GetriebeBaureihe in einer weiteren Variante die Welleneinheit ein Zahnrad, dessen Verzahnungsbreite gegenüber der Nabenbreite auf ein zweites Maß zurückgenommen ist. Von Vorteil ist dabei, dass das Zahnrad, mit dem das Zahnrad mit rückgenommener Verzahnungsbreite kämmt, aus einem Grundkörper mit verringerter Gesamtbreite fertigbar ist. Hierdurch wird Material eingespart. Alternativ, wenn das Zahnrad mit einem Ritzel kämmt, ist am Ritzel lediglich eine verkürzte Verzahnungsbreite nötig, wodurch sich die Fertigungszeit des Getriebezugs verringert.

Bei einer vorteilhaften Ausgestaltung sieht die Erfindung einer Getriebe-Baureihe vor, dass bei der ersten, zweiten und dritten Variante jeweils eine Seitenfläche des Zahnrads der Welleneinheit im Wesentlichen plan ausgebildet ist, wobei das Zahnrad mit der Seitenfläche bezüglich des Gehäuses bei allen Varianten gleich orientiert und/oder angeordnet ist. Somit ist eine gedachte Ebene definiert, auf die sich die Verzahnungsteile einer Welleneinheit beziehen.und auf die sich die benachbarten Welleneinheiten beziehen. Die Berechnung oder Überprüfung eines Getriebezugs ist dadurch erleichtert, da von den konkreten Ausbildungen der jeweils eingesetzten Welleneinheit abstrahiert werden kann.

Alternativ **kann vorgesehen** sein, dass die Varianten der Baureihe ein für alle Varianten gleiches Gehäuse umfassen, dass jede Variante zumindest durch eine Welleneinheit gekennzeichnet ist, die an einer für alle Varianten gleichen Position im Gehäuse angeordnet ist, wobei in einer ersten Variante die Welleneinheit ein Zahnrad umfasst, dessen Nabenbreite gegenüber der Verzahnungsbreite auf ein erstes Maß zurückgenommen ist, und in einer weiteren Variante die Welleneinheit ein Zahnrad umfasst, dessen Seitenflächen im Wesentlichen plan ausgebildet sind, und dass bei der ersten und der weiteren Variante jeweils eine Seitenfläche des Zahnrads der Welleneinheit im Wesentlichen plan ausgebildet ist, wobei das Zahnrad mit der Seitenfläche bezüglich des Gehäuses bei allen Varianten gleich orientiert und/oder angeordnet ist.

Alternativ **kann vorgesehen** sein, dass die Varianten der Baureihe ein für alle Varianten gleiches Gehäuse umfassen, dass jede Variante zumindest durch eine Welleneinheit gekennzeichnet ist, die an einer für alle Varianten gleichen Position im Gehäuse angeordnet ist, wobei in einer Variante die Welleneinheit ein Zahnrad umfasst, dessen Verzahnungsbreite gegenüber der Nabenbreite auf ein zweites Maß zurückgenommen ist, und in einer weiteren Variante die Welleneinheit ein Zahnrad umfasst, dessen Seitenflächen im Wesentlichen plan ausgebildet sind, und dass bei den Varianten jeweils eine Seitenfläche des Zahnrads der Welleneinheit im Wesentlichen plan ausgebildet ist, wobei das Zahnrad mit dieser Seitenfläche bezüglich des Gehäuses bei allen Varianten gleich orientiert und/oder angeordnet ist.

Alternativ **kann vorgesehen** sein, dass die Varianten der Baureihe ein für alle Varianten gleiches Gehäuse umfassen, wobei jede Variante zumindest durch eine Welleneinheit gekennzeichnet ist, die an einer für alle Varianten gleichen Position im Gehäuse angeordnet ist, wobei in einer ersten Variante die Welleneinheit ein Zahnrad umfasst, dessen Nabenbreite gegenüber der Verzahnungsbreite auf ein erstes Maß zurückgenommen ist, in einer zweiten Variante die Welleneinheit ein Zahnrad umfasst, dessen Seitenflächen im Wesentlichen plan ausgebildet sind, und in einer dritten Variante die Welleneinheit ein Zahnrad umfasst, dessen Verzahnungsbreite gegenüber der Nabenbreite auf ein zweites Maß zurückgenommen ist, und dass bei der ersten, zweiten und dritten Variante jeweils eine Seitenfläche des Zahnrads der Welleneinheit im Wesentlichen plan ausgebildet ist, wobei das Zahnrad mit der Seitenfläche bezüglich des Gehäuses bei allen Varianten gleich orientiert und/oder angeordnet ist.

Bei einer vorteilhaften Ausgestaltung weisen die Nabenbreiten der Zahnräder der Welleneinheiten bei den Varianten ein einheitliches erstes Maß auf. Somit sind dieselben Befestigungsmittel bei allen Zahnrädern der Welleneinheiten einsetzbar. Die Nabe ist also insbesondere durch den Bereich des Zahnrads gegeben, mit dem das Zahnrad auf einer Welle befestigt ist.

Bei einer vorteilhaften Ausgestaltung weicht das erste Maß höchstens 5% vom arithmetischen Mittel der Verzahnungsbreiten der Zahnräder der Welleneinheiten der Baureihe ab. Hierdurch ist ein vorteilhaftes Maß für die standardisierte Nabenbreite angegeben, bei der zum einen bei der Herstellung von Varianten mit reduzierter Verzahnungsbreite Material gespart wird und bei der zum anderen durchgängig belastbare Welleneinheiten bereitgestellt werde. Wird die Nabenbreite zu dünn gewählt, so besteht die Gefahr eines Bruchs der Passfederverbindung an der Nabe und die Gefahr eines Durchbiegens der Wellen, da bei einseitig ausgebildetem Rücksprung der Kraftangriffspunkt auf der Welle mit abnehmender Nabenbreite wandert.

Bei einer vorteilhaften Ausgestaltung umfassen die Welleneinheiten der Varianten jeweils eine einheitliche Passfeder, die jeweils in einer einheitlichen Passfedernut angeordnet ist, wobei die Passfedernut bei jeder Variante an derselben axialen Position der Welle der jeweiligen Welleneinheit angeordnet ist und das erste Maß größer ist als die Summe der Passfederlänge und einer Länge eines Passfedernutendes. Somit ist einerseits die volle Länge der Passfeder für die Kraftübertragung nutzbar und andererseits der Kraftangriffspunkt möglichst nahe an dasjenige Lager herangebracht, welches auf der Seite des Zahnrads angeordnet ist, auf der die Passfedernut über die Nabe hinausragt.

Bei einer vorteilhaften Ausgestaltung ist das erste Maß kleiner als die Länge der Passfedernut. Die Passfedernut überragt also nicht die Nabe auf der zweiten Seite, an der die Schulter in der Welle vorgesehen ist. Somit wird ein Summieren von Kerbwirkungen durch das Abdrehen der Schulter und das Fräsen der Passfedernut an der Schulter verhindert.

Bei einer vorteilhaften Ausgestaltung ist bei der Welle der Welleneinheit jeder Variante eine Schulter ausgebildet, an der das Zahnrad der Welleneinheit axial in einer Richtung festgelegt ist, insbesondere mit der im Wesentlichen plan ausgebildeten Seitenfläche. Somit ist einerseits das Zahnrad sicher und belastbar festgelegt und andererseits die Schulter als Referenz für Berechnungen des Getriebezugs, der die Welleneinheit umfasst, verwendbar. Bei einer vorteilhaften Ausgestaltung ist das Passfedernutende axial von der Schulter der Welle beabstandet. Somit sind Mehrfachkerbwirkungen an der Welle im Bereich der Schulter vermieden.

Bei einer vorteilhaften Ausgestaltung sind die Varianten für Drehmomentklassen von mindestens 50kNm ausgelegt und/oder weisen die Varianten jeweils ein Gesamtmasse von mindestens 1t auf. Für Getriebe dieser Größenordnung sind die einzelnen Bauteile wie Zahnräder, Distanzhülsen, Wellen, Lager usw. schon für sich von beträchtlicher Masse und nur unter erheblichem Materialeinsatz fertigbar. Es ist daher besonders vorteilhaft, zusätzliche Fertigungsschritte wie das Ausbilden von Rücksprüngen an Zahnrädern oder allgemein Verzahnteilen vorzusehen, um eine Wiederverwendung von Teilen und eine Materialeinsparung zu erzielen. Denn durch die Möglichkeit der Ausbildung eines Rücksprungs im Verzahnungsbereich wird eine einheitliche Nabenbreite gebildet und somit eine Wiederverwendung von Befestigungsmitteln, beispielsweise Passfedern, und Festlegungsmitteln, beispielsweise Distanzhülsen oder Schulterbereiche an Wellen, ermöglicht. Hierdurch werden die Transportkosten und die Lagerhaltungskosten, mithin die Bereitstellungskosten am Einsatzort gesenkt. Durch die Möglichkeit der Ausbildung eines Rücksprungs im Nabenbereich wird insbesondere erreicht, dass nicht alle Radkörper die Breite der überhaupt maximal benötigten Verzahnungsbreite aufweisen müssen. Hierdurch wird erheblich Material eingespart.

Vorzugsweise sind die verschiedenen Zahnrad-Varianten auf eine für alle Varianten gleiche Welle gesteckt.

Bei einer vorteilhaften Ausgestaltung kann vorgesehen sein, dass bei einem Zahnrad die Schnittlinie einer Seitenfläche mit einem Axialprofil eine im Wesentlichen gerade Linie beschreibt und die Schnittlinie der anderen Seitenfläche mit dem Axialprofil eine gestufte, jenseits der Stufung im Wesentlichen gerade Linie beschreibt, wobei die Linien auf parallelen Geraden verlaufen. Somit ist eine Form des Zahnradkörpers ausgebildet, die eine variable Gestaltung der Verzahnungsbreite bei gleichbleibender Nabenbreite des Zahnrads gestattet. Die Nabenbreite oder die Verzahnungsbreite sind durch die Stufung jeweils auf das gewünschte Maß bringbar, wobei ein solcher Rücksprung durch Drehen ausgebildet werden kann. Somit müssen nicht alle Bauteile einer Getriebestufe konstruktiv angepasst werden, wenn sich nur die Verzahnungsbreite ändern soll. Eine sich daraus ergebende Wiederverwendung von Bauteilen senkt die Herstellungskosten einer Getriebe-Baureihe, insbesondere wenn die Getriebe für Drehmomentklassen von 50 kNm und mehr und mit einem Gesamtmasse von über 500kg oder sogar über 1t vorgesehen sind und die Herstellung der Bauteile der Getriebe daher materialintensiv ist und einen erhöhten Lagerplatzbedarf und erhöhte Transportkosten aufweist.

Unter einem Zahnrad wird in dieser Schrift allgemein ein Verzahnungsteil verstanden, beispielsweise ein Stirnrad, ein Kegelrad, ein Hohlrad, ein Planetenrad, ein Sonnenritzel oder ein Schneckenrad oder ein weiterer Verzahnungsteil-Typ.

Bei einer vorteilhaften Ausgestaltung ist das Zahnrad, als Nabe mit einer Welle verbunden, wobei das Axialprofil im Bereich der Verzahnung einen Rücksprung aufweist, so dass die Verzahnungsbreite am Fußkreis der Verzahnung kleiner ist als die Nabenbreite. Somit ist aus einem Grundkörper ein Zahnrad gefertigt, dessen Verzahnungsbreite auf den für die vorgesehene Kraftübertragung des Zahnrads minimal erforderlichen Wert zurückgenommen ist. Das Zahnrad ist somit in einer Getriebestufe mit einem Zahnrad mit insgesamt verringerter Breite kombinierbar, das die Verzahnungsbreiten kämmender Zahnradpaar übereinstimmen sollen. Das Zahnrad ist weiter ohne konstruktive Änderungen auf eine Welle steckbar, die auch für Zahnräder mit größerer Verzahnungsbreite verwendbar ist. Es ist daher ein Zahnrad bereitgestellt, das in einer Baureihe von Getrieben verwendbar ist, wobei die Varianten der Baureihe aus einem Baukasten mit durch Wiederverwendung von Teilen verringerter Teileanzahl bildbar sind. Durch die verringerte Teileanzahl sind insbesondere die Logistikkosten für die Bereitstellung der einzelnen Varianten vermindert, wodurch die Herstellungskosten gesenkt sind.

Bei einer vorteilhaften Ausgestaltung weist das Axialprofil von der Nabe, insbesondere vom Nabenbereich der Welle-Nabe-Verbindung, bis zum Rücksprung eine im Wesentlichen konstante Breite auf. Von Vorteil ist dabei, dass die Fertigung aus einem zylinderförmigen Grundkörper mit konstanter Breite erfolgen kann, indem der Rücksprung durch Drehen ausgeformt wird. Somit ist die Anpassung der Verzahnungsbreite auf das gewünschte Maß in einem einzigen Arbeitsgang erreicht. Dies senkt wiederum die Herstellungskosten.

Bei einer vorteilhaften Ausgestaltung beträgt die Nabenbreite mindestens das 1,1 fache der Verzahnungsbreite. Vorzugsweise beträgt die Nabenbreite weniger als das 1,2fache der Verzahnungsbreite. Von Vorteil ist dabei, dass ein großer Bereich unterschiedlicher übertragbarer Drehmomente bereitgestellt ist, wenn das Zahnrad anstatt eines Zahnrads ohne Rücksprünge eingesetzt wird.

Bei einer vorteilhaften Ausgestaltung ist das Zahnrad als Nabe mit einer Welle verbunden, wobei das Axialprofil im Bereich der Nabe einen Rücksprung aufweist, so dass die Verzahnungsbreite am Fußkreis größer ist als die Nabenbreite im Nabenbereich der Welle-Nabe-Verbindung. Somit ist eine Zahnrad bereitgestellt, dass einerseits anstatt eines Zahnrads mit einer bestimmten Nabenbreite einsetzbar ist und andererseits mit einem Zahnrad kämmen kann, dessen Verzahnungsbreite die bestimmte Nabenbreite deutlich übersteigt. Es ist daher ein weiteres Zahnrad hergestellt, das in einer Getriebe-Baureihe einsetzbar ist, deren zugehöriger Baukasten eine reduzierte Teilevielfalt aufweist.

Bei einer vorteilhaften Ausgestaltung weist das Axialprofil vom Fußkreis bis zum Rücksprung eine im Wesentlichen konstante Breite auf. Von Vorteil ist dabei, dass die Fertigung aus einem zylinderförmigen Grundkörper mit konstanter Breite erfolgen kann, indem der Rücksprung durch Drehen ausgeformt wird.

Bei einer vorteilhaften Ausgestaltung beträgt die Verzahnungsbreite mindestens das 1,1fache der Nabenbreite. Vorzugsweise beträgt die Verzahnungsbreite weniger als das 1,2fache der Nabenbreite. Von Vorteil ist dabei, dass ein großer Bereich unterschiedlicher übertragbarer Drehmomente bereitgestellt ist, wenn das Zahnrad anstatt eines Zahnrads ohne Rücksprünge eingesetzt wird.

Bei einer vorteilhaften Ausgestaltung weicht die Mitte der Nabenbreite höchstens 40% von der Mitte der Verzahnungsbreite ab. Vorzugsweise weicht die Mitte der Nabenbreite höchstens 30% von der Mitte der Verzahnungsbreite ab. Somit sind vorteilhafte Hebelverhältnisse am Kraftangriff des Zahnrads auf seiner Welle hergestellt.

Bei einer vorteilhaften Ausgestaltung ist eine Seitenfläche im Wesentlichen planar. Somit ist eine Seitenfläche als Referenzebene für Berechnungen des Kraftflusses in dem Getriebezug, der das Zahnrad umfasst, verwendbar.

Bei einer vorteilhaften Ausgestaltung ist eine Welleneinheit vorgesehen, wobei ein erfindungsgemäßes Zahnrad auf einer Welle angeordnet ist und wobei eine Passfeder in einer in die Welle eingebrachte Passfedernut zwischen dem Zahnrad und der Welle vorgesehen ist, wobei die Passfeder und ein Passfedernutende axial im Bereich der Nabe des Zahnrads angeordnet ist, während das andere Passfedernutende die Nabe des Zahnrads axial überragt. Alternativ oder zusätzlich ist ein erfindungsgemäßes Zahnrad auf einer Welle angeordnet, wobei an der Welle eine Schulter ausgebildet ist, an der das Zahnrad mit seiner im Wesentlichen planaren Seitenfläche axial festgelegt ist. Somit ist ein erfindungsgemäßes Zahnrad in einer Getriebestufe als Modul einsetzbar. Durch die Passfederverbindung ist eine einheitliche Welle für verschiedene Zahnräder verwendbar. Somit ist ein Baukasten bildbar, mit dem verschiedene Welleneinheiten zusammengesetzt werden können, wobei die Teileanzahl des Baukastens durch Wiederverwendungen reduziert ist.

Bei einer vorteilhaften Ausgestaltung ist an der Welle ein Ritzel ausgeformt, wobei die Schulter vom Ritzel umfasst ist. Somit ist in axialer Richtung ein Referenzpunkt ausgebildet, auf den sich die verschiedenen Zahnräder zur Bildung der jeweiligen Welleneinheit beziehen können. Dieser Referenzpunkt ist für die Berechnung beispielsweise des Kraftflusses verwendbar, so dass unterschiedliche Welleneinheiten modular einsetzbar sind. Die Berechnung der einzelnen Getriebe-Varianten ist somit erheblich vereinfacht.

Bei einer vorteilhaften Ausgestaltung ist das Zahnrad auf seiner anderen Stirnseite durch eine Distanzhülse gegen ein Wellenlager festgelegt. Somit eine einfache Möglichkeit bereitgestellt, jedes Zahnrad in axialer Richtung festzulegen, wobei bei den einzelnen Welleneinheits-Varianten identische Distanzhülsen einsetzbar sind. Es ist daher die Teileanzahl, also die Teilevarianz, eines Baukastens zu Fertigung von Welleneinheiten reduziert. Hierdurch sind die Logistikkosten, Lagerhaltungskosten und also die Herstellungskosten einer Getriebe-Baureihe, bei der Welleneinheiten eingesetzt werden, reduziert.

Bei einer vorteilhaften Ausgestaltung ist ein Getriebe mit einem Gehäuse und einer Welleneinheit, bei der ein Zahnrad auf einer Welle angeordnet ist, vorgesehen, wobei am Zahnrad die Verzahnungsbreite gegenüber der Nabenbreite zurückgenommen ist, wodurch ein freier Bereich gebildet ist, wobei zumindest dieser freie Bereich von dem Gehäuse umgeben ist. Vorzugsweise ist der freie Bereich mit Öl, Luft und/oder einem ÖI-Luft-Gemisch befüllt. Somit ist ein Getriebe bereitgestellt, bei welchem das Zahnrad einer Welleneinheit gegen ein Zahnrad mit erhöhter Verzahnungsbreite austauschbar ist. Die Verzahnung und/oder der Zahnraddurchmesser sind ebenfalls durch Austausch variierbar. Das Getriebe ist daher als Variante einer Getriebe-Baureihe ausgebildet, bei der in einzelnen Varianten verschiedene Übersetzungszahlen und/oder verschiedene durchleitbare Drehmomente bereitgestellt sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Welleneinheit
- 2: Welle
- 3: Lager
- 4: Zahnrad
- 5: Ritzel
- 6: Distanzhülse
- 7: Schulter
- 8: Passfedernut
- 9: Passfeder
- 10: Auflage
- 11: Festlegungsfläche
- 20: Radkörper
- 21: Verzahnung
- 22: Seitenfläche
- 23: Seitenfläche
- 24: Ritzelverzahnung
- 30: Radkörper
- 31: Verzahnung
- 32: Seitenfläche
- 33: Seitenfläche
- 34: Ritzelverzahnung
- 40: Radkörper
- 41: Verzahnung
- 42: Seitenfläche
- 43: Seitenfläche
- 44: Ritzelverzahnung
- 50: Zahnbreitenrücksprung
- 51: Schneidweg
- 52: Nabenbreitenrücksprung

Die Erfindung wird nun anhand von Abbildungen näher erläutert:

Es zeigt
- Figur 1 eine Welleneinheit,
- Figur 2 eine Schnittansicht einer Variante einer Welleneinheit,
- Figur 3 eine Schnittansicht einer weiteren Variante einer Welleneinheit,
- Figur 4 eine Schnittansicht einer dritten Variante einer Welleneinheit.

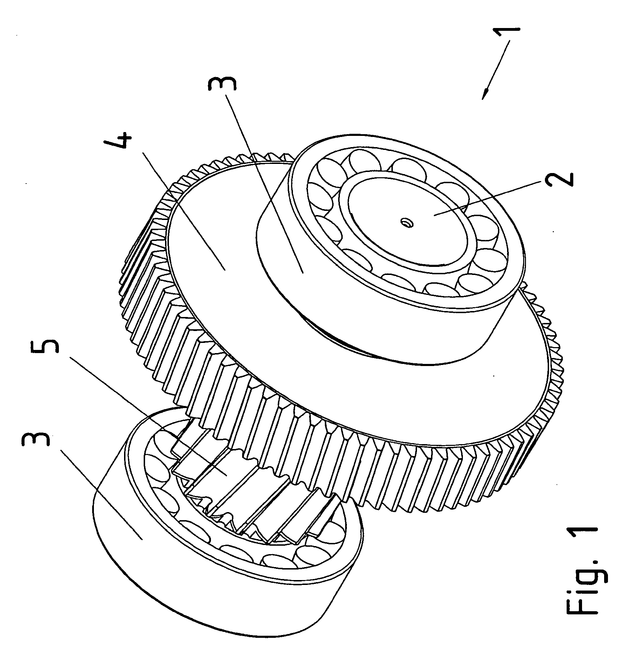

Figur 1 zeigt eine Welleneinheit 1 eines Getriebes, die eine Welle 2, Lager 3, ein Zahnrad 4 und ein Ritzel 5 umfasst.

Mit Welleneinheit wird somit in dieser Schrift jede Baugruppe eines Getriebes bezeichnet, die zumindest die funktionsnotwendigen Teile einer Getriebestufe umfasst, die mit jeweils einer Welle der Getriebestufe verbunden sind. Insbesondere umfasst jede Welleneinheit also zumindest eine Welle, ein Verzahnteil und Lagermittel.

Die Welle 3 ist durch die Lager 3 festgelegt. Die Lager 3 sind jeweils in Bohrungen eines Gehäuses angebracht.

Das Ritzel 5 ist in die Welle 1 eingearbeitet, indem eine Schrägverzahnung eingefräst ist.

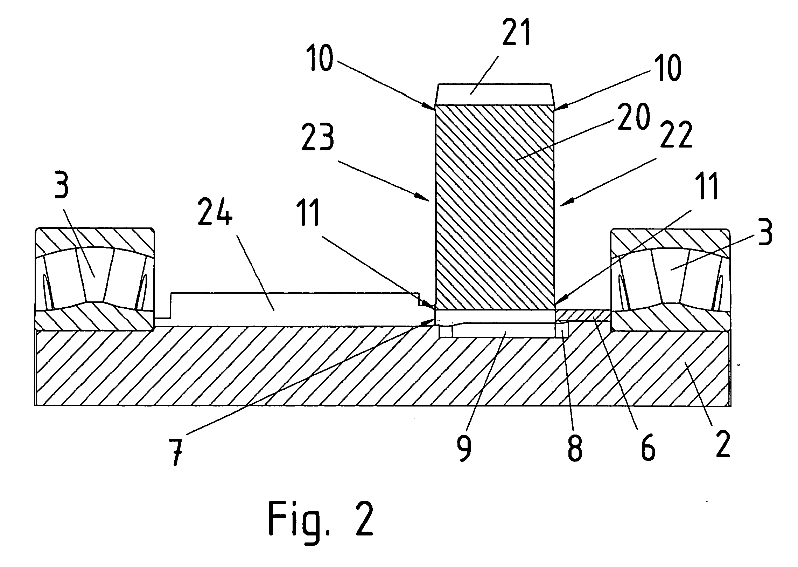

Figur 2 zeigt die Schnittansicht der oberen Hälfte der Welleneinheit aus Figur 1.

Eine Welle 2 ist an ihren Enden in je einem Lager 3 festgelegt. An der Welle 2 ist ein Ritzel 24 ausgebildet, dass in eine Schulter 7 über geht. Auf die Welle 2 ist ein Zahnrad gesteckt, das einen Radkörper 20 und eine Verzahnung 21 umfasst. Der Radkörper 20 wird axial von einer ersten Seitenfläche 22 und einer zweiten Seitenfläche 23 begrenzt. An jeder Seitenfläche 22, 23 sind radial innerhalb der Verzahnung Auflagen 10 ausgebildet, auf denen das Zahnrad aufgelegt wird zum Messen bei der Zahnradfertigung.

Die Verzahnung 21 ist mit einer Verzahnungsbreite ausgebildet, wobei unter der Verzahnungsbreite die axiale Erstreckung der Verzahnungselemente am Fußkreis verstanden wird.

Im Radkörper 20 ist eine zylindrische Radbohrung ausgebildet, durch die die Welle 2 gesteckt ist. Diese zylindrische Radbohrung bildet somit eine Nabe für das Zahnrad. Die Radbohrung wird axial beidseitig begrenzt durch jeweils eine konzentrische, plane, ringförmige Festlegungsfläche 11.

Die Festlegungsflächen 11 und die Auflagen 10 sind als Erhöhungen über den Stirnseiten 22, 23 des Radkörpers 20 ausgebildet, wobei die Erhöhung jeweils 1 mm, vorzugsweise 0,5mm, nicht übersteigen. Von diesen funktionsbedingten Abweichungen, die weniger als 1% der Abmessung des Radkörpers betragen, abgesehen sind die Seitenflächen im Wesentlichen plan als ebene Flächen ausgeführt. Die Auflagen 10 und die Festlegungsflächen 11 weisen eine hohe Bearbeitungsgüte auf, während die übrigen Oberflächen der Seitenfläche nur grob bearbeitet sind.

Die Festlegungsflächen 11 dienen zur axialen Festlegung des Radkörpers 20 zwischen der Schulter 7 und einer Distanzhülse 6, die auf die Welle 2 gesteckt wird und die sich am Innenring des Lagers 3 abstützt.

Der Abstand zwischen den Festlegungsflächen 11 definiert die Nabenbreite des Zahnrads. Die Nabenbreite ist somit das Maß der axialen Erstreckung der Radbohrung des Zahnrads.

Durch die plane, jeweils in einer Radialebene der Welle 2 verlaufende Ausformung der Seitenflächen 22, 23 ist die Nabenbreite im Wesentlichen, also abgesehen von den genannten funktionsbedingten Abweichungen oder fertigungsbedingten Oberflächenunebenheiten, gleich der Verzahnungsbreite. Die Breite des Radkörpers 20 ist im Wesentlichen konstant im Bereich der Seitenflächen 22, 23.

In der Welle 2 ist eine Passfedernut 8 vorgesehen, in die eine Passfeder 9 eingelegt ist. Die Passfedernut 8 weist an beiden Enden eine abgerundete Form auf. Daher ist die Passfeder 9 kürzer als die Passfedernut 8, denn die Ecken der Passfeder 9 würden andernfalls über die abgerundete Form hinausragen.

Ein abgerundetes Ende der Passfedernut 8 ragt über die Nabe des Radkörpers 20 hinaus. Insbesondere ist der gerundete Bereich der Passfedernut 8 außerhalb der Nabe angeordnet, so dass die Passfeder 9 mit der Nabe des Radkörpers abschließt. Somit ist einerseits die gesamte Länge der Passfeder 9 für die Kraftübertragung zwischen Zahnrad und Welle 2 nutzbar und andererseits die Passfeder so nahe wie möglich an demjenigen Lager 3 angeordnet, welches auf der Hälfte der Welle angeordnet ist, die das Zahnrad umfasst. Hierbei sind Fertigungstoleranzen und Positionierungstoleranzen von einem Millimeter eingehalten.

Durch die Anordnung der Passfeder 9 so nahe wie möglich am Lager 3 wird ein unerwünschtes Durchbiegen der Welle vermieden.

Das andere Ende der Passfedernut 8 endet axial innerhalb der Nabe des Radkörpers 20 und ragt insbesondere nicht in die Schulter 7 hinein.

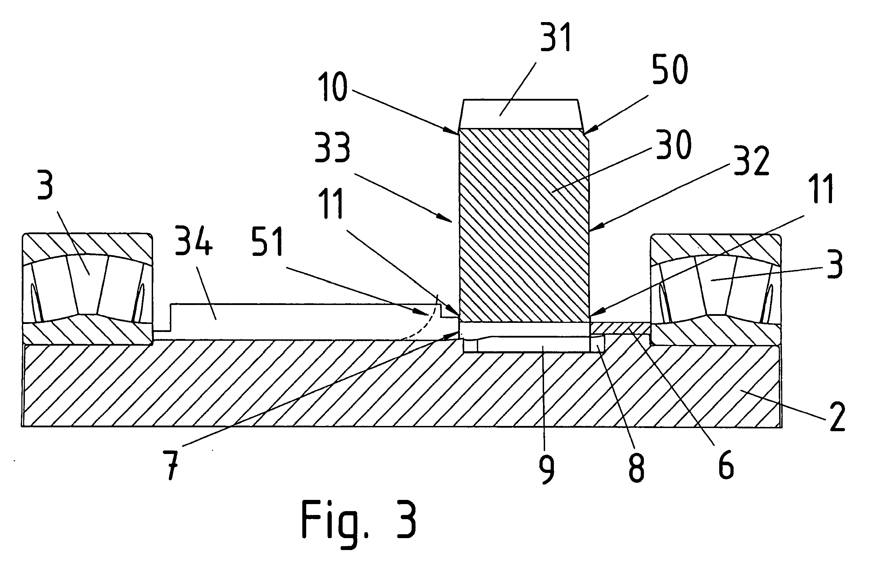

Figur 3 zeigt die Schnittansicht der oberen Hälfte einer weiteren Welleneinheit.

Die Welleneinheit umfasst eine Welle 2, die beidseitig in Lagern 3 festgelegt ist, ein Zahnrad mit einem Radkörper 30 und eine Distanzhülse 6. An der Welle 2 ist weiterhin ein Ritzel 34 ausgebildet. In einer Passfedernut 8 in der Welle 2 ist eine Passfeder 9 angeordnet.

Das Zahnrad der Welleneinheit weist eine kleinere Zähnezahl und einen kleineren Durchmesser als bei der Welleneinheit nach Figur 2 auf. Die jeweiligen Nabenbreiten, das heißt der axiale Abstand der Festlegungsflächen 11, stimmen dagegen überein. Somit ist es ermöglicht, dass die Welle 2 mit der Passfedernut 8, die Passfeder 9 und die Distanzhülse 6 identisch zu den entsprechenden Bauteilen in Figur 2 ausgeformt sind, und es sind zwei Varianten einer Baureihe von Welleneinheiten bereitgestellt. Die genannten Teile sind in den Varianten wiederverwendbar, und die Teilevielfalt bei einem Getriebebaukasten, aus dem die Welleneinheiten zusammengesetzt werden, ist reduziert.

Für die Kraftübertragung an der Verzahnung 31 ist nicht die Nabenbreite, sondern eine geringe Breite erforderlich. Es ist daher ein Rücksprung 50 ausgebildet, und die Verzahnung, die mit der Verzahnung 31 kämmt, ist ebenfalls mit der verringerten Verzahnungsbreite ausbildbar. Es können daher Materialkosten eingespart werden, da das mit der Verzahnung 31 kämmende Zahnrad eine geringere Breite aufweisen muss.

Der Rücksprung 50 weist eine plane Fläche, also eine parallel zur Seitenfläche 32 verlaufende Fläche auf, die sich in einem Bereich von 2 mm innerhalb des Fußkreisdurchmessers bis 12 mm innerhalb des Fußkreisdurchmessers erstreckt. Es schließt sich ein kegelstumpfförmiger Übergangsbereich mit einem Öffnungswinkel von45° an, der an die Seitenfläche 32 grenzt. In dem Bereich zwischen Fußkreis und beginn der planen Fläche des Rücksprungs 50 ist die seitliche Abschrägung der Verzahnung weitergeführt.

Alternativ kämmt die Verzahnung 31 mit einem an einer Welle ausgeformten Ritzel. Der Rücksprung 50 führt in diesem Fall zu einer verkürzten Verzahnungsbreite des Ritzels und folglich zu einem verkürzten Schneidweg im Ritzel, wie er zur Illustration am Ritzel 34 als Schneidweg 51 angedeutet ist. Durch die auf das erforderliche Mindestmaß zurückgenommene Verzahnungsbreite kann beim Fräsen des Ritzels nach einer verkürzten Strecke ausgetauscht werden.

Der Rücksprung 50 ist nur auf einer Seitenfläche 32 des Radkörpers 30 ausgebildet. Die gegenüberliegende Seitenfläche 33 ist plan ausgeführt, abgesehen von einer 0,5mm abgesetzten ringförmigen Auflage 10. Der Radkörper weist daher zwei unterschiedliche Breiten auf: zum einen die Nabenbreite, die konstant bis zum Rücksprung 50 eingehalten wird, und zum anderen die Verzahnungsbreite, die durch den Rücksprung 50 erreicht wird.

Durch die im Übrigen plane Ausführung der Seitenflächen 32, 33 ist eine besonders einfache Fertigung des Zahnrads durch Guss und/oder Drehen ermöglicht.

Die zum Ritzel orientierte Seitenfläche 33 des Radkörpers 30 ist plan ausgeführt und wird als Referenz für die Berechnung des Kraftflusses im Getriebezug des Getriebes verwendet. Die Orientierung dieser Seitenfläche 33 relativ zum Gehäuse des Getriebes sowie die Anordnung der Seitenfläche 33 auf der Welle 2, insbesondere bezüglich der Schulter 7 und/oder des Ritzels 34, ist für alle Varianten gleich.

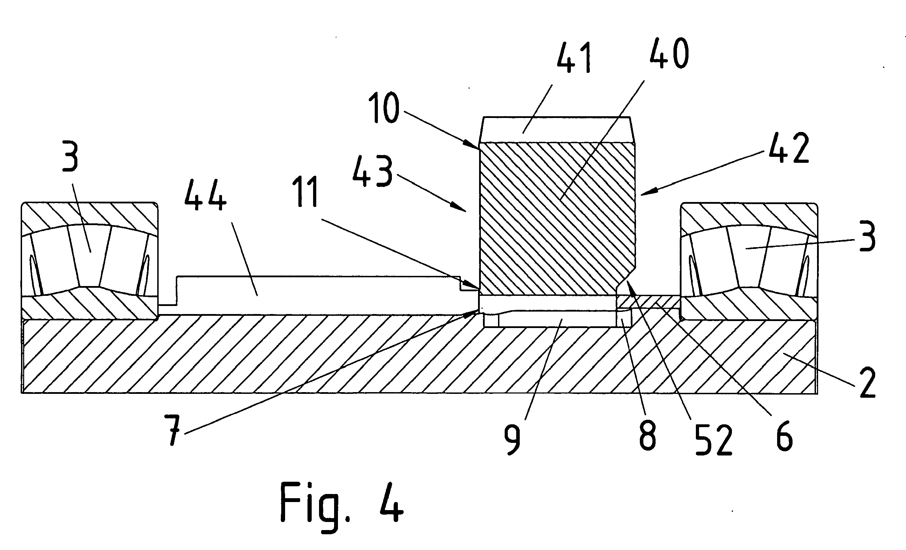

Figur 4 zeigt die Schnittansicht der oberen Hälfte einer weiteren Welleneinheit.

Die Welleneinheit umfasst eine Welle 2, die beidseitig in Lagern 3 festgelegt ist, ein Zahnrad mit einem Radkörper 40 und eine Distanzhülse 6. An der Welle 2 ist weiterhin ein Ritzel 44 ausgebildet. In einer Passfedernut 8 in der Welle 2 ist eine Passfeder 9 angeordnet.

Das Zahnrad der Welleneinheit weist eine andere Zähnezahl und einen anderen Durchmesser als bei der Welleneinheit nach Figur 2 auf. Für die Kraftübertragung an der Verzahnung 41 ist nicht die Nabenbreite, sondern eine größere Breite erforderlich.

Um die gleiche Distanzhülse 6 verwenden zu können sowie gleiche geometrische Verhältnisse für das Ritzel 44 und die Schulter 7, insbesondere in axialer Richtung, herstellen zu können, ist ein Rücksprung 52 im Bereich der Nabe auf einer Seitenfläche 42 des Radkörpers 40 ausgebildet. Somit weist der Radkörper 50 dieselbe Nabenbreite auf, wie die Zahnräder nach den Figuren 2 und 3.

Die Distanzhülse 6 weist einen äußeren Durchmesser auf. Die plane Fläche des Rücksprungs 52 überragt diesen äußeren Durchmesser um 1%. Es schließt sich radial nach außen ein kegelstumpfförmiger Übergangsbereich zu der Seitenfläche des Radkörpers an mit einem Öffnungswinkel von 45°.

Das Ritzel 44 hat eine andere Zähnezahl als die Ritzel 24, 34.

Die andere Seitenfläche 43 des Radkörpers 40 ist im Wesentlichen plan ausgebildet und weist eine Auflage 10 und eine Festlegungsfläche 10 auf. Die Seitenfläche 43 ist somit als Referenzfläche für die Berechnung des Kraftflusses im Getriebezug verwendbar.

Die Festlegungsflächen 11 weisen einen höherwertigen Bearbeitungsgrad als die übrige Oberfläche der Seitenflächen 43, 44 auf, um ein definierte axiale Festlegung des Radkörpers 40 zu erreichen.

Bei einem weitern Ausführungsbeispiel ist statt der Distanzhülse ein Lagerring vorgesehen. Die radiale Abmessung des Rücksprungs der Nabenbreite orientiert sich in diesem Fall am Außendurchmesser des Lagerrings.

Mit den Varianten nach Figur 2, 3, 4 ist eine Baureihe von Welleneinheiten für eine GetriebeBaureihe bereitgestellt. Die Welleneinheiten sind mit unterschiedlichen Verzahnungen und Verzahnungsbreiten ausstattbar, wobei beim Zusammenbau dieselbe Welle 2, dieselbe Distanzhülse 6, dieselbe Passfedernut 8 mit Passfeder 9 nutzbar ist.

Unterschiedliche Verzahnungsbreiten werden durch Rücksprünge in einer Seitenfläche hergestellt, wobei die Nabenbreiten aller vorgesehenen Zahnrad-Varianten identisch sind.

Innerhalb der Baureihe ist weiter diejenige Ebene für die Berechnungen des Kraftflusses im Getriebezug benutzbar, die durch die Seitenfläche des Zahnrads definiert wird, die in keiner Variante einen Rücksprung aufweist. Diese Seitenflächen sind in jeder Variante relativ zum Gehäuse und relativ zur Welle orientiert und angeordnet. Hierdurch sind die Varianten von Welleneinheiten als Module in den jeweiligen Getriebezug standardisiert einpassbar.

Die bei den Varianten vorgesehene einheitliche Nabenbreite orientiert sich nicht an der breitesten vorgesehenen Verzahnungsbreite, sondern wird als das arithmetisches Mittel der Verzahnungsbreiten über die vorgesehenen Verzahnungsbreiten festgesetzt.

Eine größere Baureihe umfasst mehreren Einzel-Baureihen, die jeweils nach der beschriebenen Art ausgebildet sind, wobei die jeweils bei den Einzel-Baureihen vorgesehenen Gehäuse, Wellen, Distanzhülse und/oder Passfedernuten mit Passfedern jeweils individuell oder einheitlich ausgeformt sind.

Bei jeder dieser Einzel-Baureihen ist jeweils eine einheitliche Nabenbreite gewählt, die höchstens 5% von dem arithmetischen Mittel der Verzahnungsbreiten über die Varianten der Einzel-Baureihe abweicht. Die jeweilige Abweichung orientiert sich an den resultierenden Biegekräften in der Welle und/oder an den Fertigungszahlen und/oder Fertigungskosten der Zahnräder. Vorzugsweise ist das unbearbeitete, also ohne Rücksprünge gefertigte Zahnrad dasjenige mit der größten Stückzahl oder mit einer der größten Stückzahlen in der EinzelBaureihe. Die Verzahnungsbreite dieses Zahnrads legt somit die einheitliche Nabenbreite fest, weil beide Seitenflächen im Wesentlichen plan und parallel ausgeformt sind. Somit weist jede Einzelbaureihe vorzugsweise eine Variante ohne Rücksprünge auf, wobei auch Einzel-Baureihen vorsehbar sind, bei denen die Variante, die die Nabenbreite vorgibt, nur mit geringem Stufenmaß ausgebildete Rücksprünge aufweist. Die Nabenbreite wird weiter zusätzlich durch die für die Kraftübertragung minimal erforderlich Passfederlänge und die zugehörige Passfedernutlänge bestimmt.

Innerhalb jeder Einzel-Baureihe beträgt die Nabenbreite bei den Varianten, bei denen die Verzahnungsbreite größer als die Nabenbreite ist, das 0,8fache bis 0,9fache der Verzahnungsbreite. Größere Abweichungen sind vorzugsweise vermieden, da für diese der Kraftangriff an der Welle zu unsymmetrisch und zu weit entfernt vom Lager erfolgt. Die Nabenbreite beträgt vorzugsweise bei den Varianten, bei denen die Verzahnungsbreite kleiner als die Nabenbreite ist, das 1,1fach bis 1,2fache der Verzahnungsbreite. Eine größere Abweichung ist vorzugsweise vermieden, da für diese der Kraftangriff an der Welle zu unsymmetrisch erfolgt. Geringere Abweichungen bei beiden Varianten werden vorzugsweise nicht ausgeführt, um die Zahl der Fertigungsschritte zu senken. Insbesondere Rücksprünge von weniger als 3mm werden bei Weiterbildungen der Getriebe-Baureihe nicht ausgeführt.

Bei einer Getriebe-Baureihe ist vorzugsweise jede Welleneinheit jeder Getriebestufe als Variante einer Welleneinheit-Baureihe nach der beschriebenen Art fertigbar. Vorzugsweise sind Bauteile wie Passfeder, Schulterabmessung auf der Welle, Distanzhülse und/oder Lager zwischen verschiedenen Welleneinheiten wiederverwendbar.

## Patentansprüche

1. Verfahren zur Herstellung eines Getriebes,
wobei
verschiedene Getriebe-Varianten gebildet werden, indem verschiedene Zahnrad-Varianten (4, 20, 30, 40) auf eine für alle Varianten gleiche Welle (2) gesteckt werden,
wobei die Zahnräder (4, 20, 30, 40) mit einer für alle Varianten gleichen Nabenbreite gefertigt werden,
wobei
- eine erste Zahnrad-Variante (40) aus einem Grundkörper mit einer ersten Breite gefertigt wird, bei der die Verzahnungsbreite gleich der ersten Breite ist und im Nabenbereich die Nabenbreite gegenüber der ersten Breite an einer Seitenfläche (42) auf ein erstes Maß zurückgenommen wird
- eine weitere Zahnrad-Variante (30) aus einem Grundkörper mit einer weiteren Breite gefertigt wird, wobei die weitere Breite gleich der Nabenbreite ist und im Verzahnungsbereich die Verzahnungsbreite gegenüber der weiteren Breite an einer Seitenfläche (42) zurückgenommen wird auf die Verzahnungsbreite der Getriebestufe (1) der Getriebe-Variante, die die Zahnrad-Variante (30) umfasst.

2. Verfahren zur Herstellung eines Getriebes,
wobei
verschiedene Getriebe-Varianten gebildet werden, indem verschiedene Zahnrad-Varianten (4, 20, 30, 40) auf eine für alle Varianten gleiche Welle (2) gesteckt werden,
wobei die Zahnräder (4, 20, 30, 40) mit einer für alle Varianten gleichen Nabenbreite gefertigt werden,
wobei
- eine erste Zahnrad-Variante (40) aus einem Grundkörper mit einer ersten Breite gefertigt wird, bei der die Verzahnungsbreite gleich der ersten Breite ist und im Nabenbereich die Nabenbreite gegenüber der ersten Breite an einer Seitenfläche (42) auf ein erstes Maß zurückgenommen wird
- eine zweite Zahnrad-Variante (20) aus einem Grundkörper mit einer zweiten Breite gefertigt wird, wobei die zweite Breite gleich der Nabenbreite und der Verzahnungsbreite ist,
- eine dritte Zahnrad-Variante (30) aus einem Grundkörper mit einer dritten Breite gefertigt wird, wobei die dritte Breite gleich der Nabenbreite ist und im Verzahnungsbereich die Verzahnungsbreite gegenüber der dritten Breite an einer Seitenfläche (42) zurückgenommen wird auf die Verzahnungsbreite der Getriebestufe (1) der Getriebe-Variante, die die Zahnrad-Variante (30) umfasst.

3. Verfahren zur Herstellung eines Getriebes nach Anspruch 1 oder 2,
wobei
die weitere Breite entsprechend Anspruch 1 oder die zweit Breite entsprechend Anspruch 2 und/oder die dritte Breite entsprechend Anspruch 2 gleich dem ersten Maß ist.

4. Verfahren zur Herstellung eines Getriebes nach einem der Ansprüche 1 bis 3,
wobei
das erste Maß derart festgelegt wird, dass es höchstens 5% vom arithmetischen Mittel der Verzahnungsbreiten der Zahnrad-Varianten (20, 30, 40) abweicht, insbesondere gleich dem arithmetischen Mittel ist.

5. Verfahren zur Herstellung eines Getriebes nach einem der Ansprüche 1 bis 4,
wobei
die gefertigte Zahnrad-Variante (4, 20, 30, 40) auf eine einheitliche Welle (2) bis zu einer Schulter (7) der Welle (2) aufgesteckt wird
und/oder nach Aufstecken der gefertigten Zahnrad-Variante (20, 30, 40) eine einheitliche Distanzhülse (6) auf die Welle (2) aufgesteckt wird.

6. Getriebe-Baureihe,
**wobei**
die Varianten der Baureihe ein für alle Varianten gleiches Gehäuse umfassen,
**wobei** jede Variante zumindest durch eine Welleneinheit (1) gekennzeichnet ist,
die an einer für alle Varianten gleichen Position im Gehäuse angeordnet ist,
wobei in einer ersten Variante die Welleneinheit (1) ein Zahnrad (40) umfasst, dessen Nabenbreite **nur an einer Seitenfläche (42)** gegenüber der Verzahnungsbreite auf ein erstens Maß zurückgenommen ist,
und in einer weiteren Variante die Welleneinheit (1) ein Zahnrad (30) umfasst, dessen Verzahnungsbreite **nur an einer Seitenfläche** (32) gegenüber der Nabenbreite auf ein zweites Maß zurückgenommen ist,
**wobei** bei der ersten und der weiteren Variante jeweils eine Seitenfläche (23, 33, 43) des Zahnrads (20, 30, 40) der Welleneinheit (1) im Wesentlichen plan **als ebene Fläche** ausgebildet ist,
wobei das Zahnrad (20, 30, 40) mit der **plan als ebene Fläche ausgebildeten** Seitenfläche (23, 33, 43) bezüglich des Gehäuses bei allen Varianten gleich orientiert und/oder angeordnet ist,
**und wobei die Nabenbreite der weiteren Variante gleich dem ersten Maß ist.**

7. Getriebe-Baureihe,
**wobei** die Varianten der Baureihe ein für alle Varianten gleiches Gehäuse umfassen,
**wobei** jede Variante zumindest durch eine Welleneinheit (1) gekennzeichnet ist,
die an einer für alle Varianten gleichen Position im Gehäuse angeordnet ist,
wobei in einer ersten Variante die Welleneinheit (1) ein Zahnrad (40) umfasst, dessen Nabenbreite gegenüber der Verzahnungsbreite **nur an einer Seitenfläche** (42) auf ein erstes Maß zurückgenommen ist,
und in einer weiteren Variante die Welleneinheit (1) ein Zahnrad (20) umfasst, dessen Seitenflächen (22, 23) im Wesentlichen plan ausgebildet sind,
und **wobei** bei der ersten und der weiteren Variante jeweils eine Seitenfläche (23, 33, 43) des Zahnrads (20, 30, 40) der Welleneinheit (1) im Wesentlichen plan **als ebene Fläche** ausgebildet ist,
wobei das Zahnrad (20, 30, 40) mit der **plan als ebene Fläche ausgebildeten** Seitenfläche (23, 33, 43) bezüglich des Gehäuses bei allen Varianten gleich orientiert und/oder angeordnet ist
**und wobei bei der Welle (2) der Welleneinheit (1) jeder Variante eine Schulter (7) ausgebildet ist,**
**an der das Zahnrad (4, 20, 30, 40) der Welleneinheit (1) axial**
**mit der im Wesentlichen plan als ebene Fläche ausgebildeten Seitenfläche (23, 33, 43) in einer Richtung festgelegt ist.**

8. Getriebe-Baureihe,
**wobei** die Varianten der Baureihe ein für alle Varianten gleiches Gehäuse umfassen,
**wobei** jede Variante zumindest durch eine Welleneinheit (1) gekennzeichnet ist,
die an einer für alle Varianten gleichen Position im Gehäuse angeordnet ist,
wobei in einer Variante die Welleneinheit (1) ein Zahnrad (30) umfasst, dessen Verzahnungsbreite gegenüber der Nabenbreite **nur an einer Seitenfläche (32)** auf ein Maß zurückgenommen ist,
und in einer weiteren Variante die Welleneinheit (1) ein Zahnrad (20) umfasst, dessen Seitenflächen (22, 23) im Wesentlichen plan ausgebildet sind,
und **wobei** bei den Varianten jeweils eine Seitenfläche (23, 33, 43) des Zahnrads (20, 30, 40) der Welleneinheit (1) im Wesentlichen plan **als ebene Fläche** ausgebildet ist,
wobei das Zahnrad (20, 30, 40) mit **der plan als ebene Fläche ausgebildeten** Seitenfläche (23, 33, 43) bezüglich des Gehäuses bei allen Varianten gleich orientiert und/oder angeordnet ist
**und wobei bei der Welle (2) der Welleneinheit (1) jeder Variante eine Schulter (7) ausgebildet ist,**
**an der das Zahnrad (4, 20, 30, 40) der Welleneinheit (1) axial**
**mit der im Wesentlichen plan als ebene Fläche ausgebildeten Seitenfläche (23, 33, 43) in einer Richtung festgelegt ist.**

9. Getriebe-Baureihe,
**wobei** die Varianten der Baureihe ein für alle Varianten gleiches Gehäuse umfassen,
dass jede Variante zumindest durch eine Welleneinheit (1) gekennzeichnet ist,
die an einer für alle Varianten gleichen Position im Gehäuse angeordnet ist,
wobei in einer ersten Variante die Welleneinheit (1) ein Zahnrad (40) umfasst, dessen Nabenbreite gegenüber der Verzahnungsbreite **nur an einer Seitenfläche (42)** auf ein erstes Maß zurückgenommen ist,
in einer zweiten Variante die Welleneinheit (1) ein Zahnrad (20) umfasst, dessen Seitenflächen (22, 23) im Wesentlichen plan ausgebildet sind, und
in einer dritten Variante die Welleneinheit (1) ein Zahnrad (30) umfasst, dessen Verzahnungsbreite gegenüber der Nabenbreite **nur an einer Seitenfläche (32)** auf ein zweites Maß zurückgenommen ist, und dass bei der ersten, zweiten und dritten Variante jeweils eine Seitenfläche (23, 33, 43) des Zahnrads (20, 30, 40) der Welleneinheit (1) im Wesentlichen plan ausgebildet ist,
wobei das Zahnrad (20, 30, 40) mit der **plan als ebene Fläche ausgebildeten** Seitenfläche (23, 33, 43) bezüglich des Gehäuses bei allen Varianten gleich orientiert und/oder angeordnet ist
**und wobei bei der Welle (2) der Welleneinheit (1) jeder Variante eine Schulter (7) ausgebildet ist,**
**an der das Zahnrad (4, 20, 30, 40) der Welleneinheit (1) axial**
**mit der im Wesentlichen plan als ebene Fläche ausgebildeten Seitenfläche (23, 33, 43) in einer Richtung festgelegt ist.**

10. Getriebe-Baureihe nach **Anspruch** 9,
wobei
das Zahnrad (40) der Welleneinheit (1) der ersten Variante ein Axialprofil hat, wobei das Axialprofil des Zahnrads (40) im Bereich der Nabe einen Rücksprung (52) aufweist, so dass die Verzahnungsbreite am Fußkreis größer ist als die Nabenbreite im Nabenbereich der Welle-Nabe-Verbindung
und/oder das Zahnrad (30) der Welleneinheit der dritten Varianten ein Axialprofil hat, wobei das Axialprofil des Zahnrads im Bereich der Verzahnung einen Rücksprung (50) aufweist, so dass die Verzahnungsbreite am Fußkreis der Verzahnung kleiner ist als die Nabenbreite.

11. Getriebe-Baureihe nach einem der Ansprüche 6 bis 10,
wobei
die Nabenbreiten der Zahnräder (4, 20, 30, 40) der Welleneinheiten (1) bei den Varianten ein einheitliches erstes Maß aufweisen, insbesondere wobei
das erste Maß höchstens 5% vom arithmetischen Mittel der Verzahnungsbreiten der Zahnräder (20, 30, 40) der Welleneinheiten (1) der Baureihe abweicht.

12. Getriebe-Baureihe nach einem der Ansprüche 6 bis 11,
wobei
die Welleneinheiten (1) der Varianten jeweils eine einheitliche Passfeder (9) umfassen, die jeweils in einer einheitlichen Passfedernut (8) angeordnet ist,
wobei die Passfedernut (8) bei jeder Variante an derselben axialen Position der Welle (2) der jeweiligen Welleneinheit (1) angeordnet ist
und das erste Maß größer ist als die Summe der Passfederlänge und einer Länge eines Passfedernutendes
und/oder das erste Maß kleiner ist als die Länge der Passfedernut (8).

13. Getriebe-Baureihe nach einem der Ansprüche 6 bis 12,
wobei
die verschiedenen Zahnrad-Varianten (4, 20, 30, 40) auf eine für alle Varianten gleiche Welle (2) gesteckt sind.

14. Getriebe-Baureihe nach einem der Ansprüche 6 bis 13,
wobei
bei der Welle (2) der Welleneinheit (1) jeder Variante eine Schulter (7) ausgebildet ist,
an der das Zahnrad (4, 20, 30, 40) der Welleneinheit (1) axial in einer Richtung festgelegt ist, **wobei** das Passfedernutende axial von der Schulter (7) der Welle (2) beabstandet ist.

15. Getriebe-Baureihe nach einem der Ansprüche 6 bis 14,
wobei
die Varianten jeweils eine Gesamtmasse von mindestens 1t aufweisen und/oder die Varianten für Drehmomentklassen von mindestens 50kNm ausgelegt sind.

## Claims

1. Method for the production of a gearing,
wherein
different gearing variants are formed by fitting different gearwheel variants (4, 20, 30, 40) on a shaft (2) which is the same for all variants,
wherein the gearwheels (4, 20, 30, 40) are fabricated with a hub width which is the same for all variants, wherein
- a first gearwheel variant (40) is fabricated from a base body with a first width, the toothing width being equal to the first width and in the hub region the hub width being reduced, in relation to the first width at a side face (42), to a first dimension
- a further gearwheel variant (30) is fabricated from a base body with a further width, the further width being equal to the hub width and in the toothing region the toothing width being reduced, in relation to the further width at a side face (42), to the toothing width of the gearing stage (1) of the gearing variant comprising the gearwheel variant (30).

2. Method for the production of a gearing,
wherein
different gearing variants are formed by fitting different gearwheel variants (4, 20, 30, 40) on a shaft (2) which is the same for all variants,
wherein the gearwheels (4, 20, 30, 40) are fabricated with a hub width which is the same for all variants, wherein
- a first gearwheel variant (40) is fabricated from a base body with a first width, the toothing width being equal to the first width and in the hub region the hub width being reduced, in relation to the first width at a side face (42), to a first dimension
- a second gearwheel variant (20) is fabricated from a base body with a second width, the second width being equal to the hub width and to the toothing width,
- a third gearwheel variant (30) is fabricated from a base body with a third width, the third width being equal to the hub width and in the toothing region the toothing width being reduced, in relation to the third width at a side face (42), to the toothing width of the gearing stage (1) of the gearing variant comprising the gearwheel variant (30).

3. Method for the production of a gearing according to Claim 1 or 2,
wherein
the further width according to Claim 1 or the second width according to Claim 2 and/or the third width according to Claim 2 is equal to the first dimension.

4. Method for the production of a gearing according to one of Claims 1 to 3,
wherein
the first dimension is set in such a way that it deviates by at most 5% from the arithmetic mean of the toothing widths of the gearwheel variants (20, 30, 40), in particular is equal to the arithmetic mean.

5. Method for the production of a gearing according to one of Claims 1 to 4,
wherein
the fabricated gearwheel variant (4, 20, 30, 40) is fitted on a uniform shaft (2) as far as a shoulder (7) of the shaft (2)
and/or after fitting on the fabricated gearwheel variant (20, 30, 40) a uniform distance sleeve (6) is fitted on the shaft (2).

6. Gearing series,
wherein
the variants of the series comprise a housing which is the same for all variants
wherein each variant is characterised at least by a shaft unit (1) which is arranged at a position, which is the same for all variants, in the housing,
wherein in a first variant the shaft unit (1) comprises a gearwheel (40), the hub width of which is reduced, only at a side face (42) in relation to the toothing width, to a first dimension,
and in a further variant the shaft unit (1) comprises a gearwheel (30), the toothing width of which is reduced, only at a side face (32) in relation to the hub width, to a second dimension,
wherein in the first and the further variant in each case a side face (23, 33, 43) of the gearwheel (20, 30, 40) of the shaft unit (1) is formed substantially plane as a plane surface,
wherein the gearwheel (20, 30, 40) is, with the side face (23, 33, 43) formed plane as a plane surface, in all variants identically oriented and/or arranged with respect to the housing,
and wherein the hub width of the further variant is equal to the first dimension.

7. Gearing series,
wherein the variants of the series comprise a housing which is the same for all variants
wherein each variant is characterised at least by a shaft unit (1) which is arranged at a position, which is the same for all variants, in the housing,
wherein in a first variant the shaft unit (1) comprises a gearwheel (40), the hub width of which is reduced, only at a side face (42) in relation to the toothing width, to a first dimension,
and in a further variant the shaft unit (1) comprises a gearwheel (20), the side faces (22, 23) of which are formed substantially plane,
and wherein in the first and the further variant in each case a side face (23, 33, 43) of the gearwheel (20, 30, 40) of the shaft unit (1) is formed substantially plane as a plane surface,
wherein the gearwheel (20, 30, 40) is, with the side face (23, 33, 43) formed plane as a plane surface, in all variants identically oriented and/or arranged with respect to the housing,
and wherein in the case of the shaft (2) of the shaft unit (1) of each variant, a shoulder (7) is formed,
at which the gearwheel (4, 20, 30, 40) of the shaft unit (1) is, with the side face (23, 33, 43) formed substantially plane as a plane surface, axially fixed in one direction.

8. Gearing series,
wherein the variants of the series comprise a housing which is the same for all variants
wherein each variant is characterised at least by a shaft unit (1) which is arranged at a position, which is the same for all variants, in the housing,
wherein in one variant the shaft unit (1) comprises a gearwheel (30), the toothing width of which is reduced, only at a side face (32) in relation to the hub width, to a dimension,
and in a further variant the shaft unit (1) comprises a gearwheel (20), the side faces (22, 23) of which are formed substantially plane,
and wherein in the variants in each case a side face (23, 33, 43) of the gearwheel (20, 30, 40) of the shaft unit (1) is formed substantially plane as a plane surface, wherein the gearwheel (20, 30, 40) is, with the side face (23, 33, 43) formed plane as a plane surface, in all variants identically oriented and/or arranged with respect to the housing,
and wherein in the case of the shaft (2) of the shaft unit (1) of each variant, a shoulder (7) is formed,
at which the gearwheel (4, 20, 30, 40) of the shaft unit (1) is, with the side face (23, 33, 43) formed substantially plane as a plane surface, axially fixed in one direction.

9. Gearing series,
wherein the variants of the series comprise a housing which is the same for all variants
that [sic] each variant is characterised at least by a shaft unit (1) which is arranged at a position., which is the same for all variants, in the housing,
wherein in a first variant the shaft unit (1) comprises a gearwheel (40), the hub width of which is reduced, only at a side face (42) in relation to the toothing width, to a first dimension,
in a second variant the shaft unit (1) comprises a gearwheel (20), the side faces (22, 23) of which are formed substantially plane, and
in a third variant the shaft unit (1) comprises a gearwheel (30), the toothing width of which is reduced, only at a side face (32) in relation to the hub width, to a second dimension, and that [sic] in the first, second and third variant in each case a side face (23, 33, 43) of the gearwheel (20, 30, 40) of the shaft unit (1) is formed substantially plane,
wherein the gearwheel (20, 30, 40) is, with the side face (23, 33, 43) formed plane as a plane surface, in all variants identically oriented and/or arranged with respect to the housing,
and wherein in the case of the shaft (2) of the shaft unit (1) of each variant, a shoulder (7) is formed,
at which the gearwheel (4, 20, 30, 40) of the shaft unit (1) is, with the side face (23, 33, 43) formed substantially plane as a plane surface, axially fixed in one direction.

10. Gearing series according to Claim 9,
wherein
the gearwheel (40) of the shaft unit (1) of the first variant has an axial profile, the axial profile of the gearwheel (40) having a recess (52) in the region of the hub, so that the toothing width at the root circle is greater than the hub width in the hub region of the shaft-hub connection
and/or the gearwheel (30) of the shaft unit of the third variant has an axial profile, the axial profile of the gearwheel having a recess (50) in the region of the toothing, so that the toothing width at the root circle is less than the hub width.

11. Gearing series according to one of Claims 6 to 10, wherein
the hub widths of the gearwheels (4, 20, 30, 40) of the shaft units (1) in the variants have a uniform first dimension, in particular
the first dimension deviating by at most 5% from the arithmetic mean of the toothing widths of the gearwheels (20, 30, 40) of the shaft units (1) of the series.

12. Gearing series according to one of Claims 6 to 11, wherein
the shaft units (1) of the variants in each case comprise a uniform feather key (9) which is in each case arranged in a uniform feather-key groove (8),
wherein the feather-key groove (8) in each variant is arranged at the same axial position of the shaft (2) of the respective shaft unit (1)
and the first dimension is greater than the sum of the feather-key length and a length of a feather-key-groove end
and/or the first dimension is less than the length of the feather-key groove (8).

13. Gearing series according to one of Claims 6 to 12, wherein
the different gearwheel variants (4, 20, 30, 40) are fitted on a shaft (2) which is the same for all variants.

14. Gearing series according to one of Claims 6 to 13, wherein
in the case of the shaft (2) of the shaft unit (1) of each variant, a shoulder (7) is formed,
at which the gearwheel (4, 20, 30, 40) of the shaft unit (1) is axially fixed in one direction,
wherein the feather-key-groove end is spaced axially from the shoulder (7) of the shaft (2).

15. Gearing series according to one of Claims 6 to 14, wherein
the variants in each case have a total mass of at least 1 t and/or
the variants are designed for torque classes of at least 50 kNm.

## Revendications

1. Procédé de fabrication d'une transmission, dans lequel
différentes variantes de transmission sont formées en montant différentes variantes de roues dentées (4, 20, 30, 40) sur un arbre (2) identique pour toutes les variantes,
les roues dentées (4, 20, 30, 40) étant fabriquées avec une largeur de moyeu identique pour toutes les variantes,
dans lequel
- une première variante de roue dentée (40) est fabriquée à partir d'un corps de base d'une première largeur, dans laquelle la largeur de denture est égale à la première largeur et, dans la zone du moyeu, la largeur de moyeu est diminuée, par rapport à la première largeur, à une première dimension sur une face latérale (42)
- une autre variante de roue dentée (30) est fabriquée à partir d'un corps de base d'une autre largeur, l'autre largeur étant égale à la largeur dé moyeu et, dans la zone de la denture, la largeur de denture étant diminuée, par rapport à l'autre largeur, sur une face latérale (42), à la largeur de denture de l'étage de transmission (1) de la variante de transmission qui comprend la variante de roue dentée (30).

2. Procédé de fabrication d'une transmission, dans lequel
différentes variantes de transmission sont formées en montant différentes variantes de roues dentées (4, 20, 30, 40) sur un arbre (2) identique pour toutes les variantes,
les roues dentées (4, 20, 30, 40) étant fabriquées avec une largeur de moyeu identique pour toutes les variantes,
dans lequel
- une première variante de roue dentée (40) est fabriquée à partir d'un corps de base d'une première largeur, dans laquelle la largeur de denture est égale à la première largeur et, dans la zone du moyeu, la largeur de moyeu est diminuée, par rapport à la première largeur, à une première dimension sur une face latérale (42)
- une deuxième variante de roue dentée (20) est fabriquée à partir d'un corps de base d'une deuxième largeur, la deuxième largeur étant égale à la largeur de moyeu et à la largeur de denture,
- une troisième variante de roue dentée (30) est fabriquée à partir d'un corps de base d'une troisième largeur, la troisième largeur étant égale à la largeur de moyeu et, dans la zone de la denture, la largeur de denture étant diminuée, par rapport à la troisième largeur, sur une face latérale (42), à la largeur de denture de l'étage de transmission (1) de la variante de transmission qui comprend la variante de roue dentée (30).

3. Procédé de fabrication d'une transmission selon la revendication 1 ou 2, dans lequel l'autre largeur selon la revendication 1 ou la deuxième largeur selon la revendication 2 et/ou la troisième largeur selon la revendication 2 est égale à la première dimension.

4. Procédé de fabrication d'une transmission selon une des revendications 1 à 3, dans lequel
la première dimension est définie de façon qu'elle s'écarte au maximum de 5 % de la moyenne arithmétique des largeurs de denture des variantes de roues dentées (20, 30, 40), en particulier qu'elle soit égale à la moyenne arithmétique.

5. Procédé de fabrication d'une transmission selon une des revendications 1 à 4, dans lequel
la variante de roue dentée (4, 20, 30, 40) fabriquée est montée sur un arbre (2) standardisé jusqu'à un épaulement (7) de l'arbre (2)
et/ou après montage de la variante de roue dentée (20, 30, 40) fabriquée, une douille d'écartement (6) standardisée est montée sur l'arbre (2).

6. Gamme de transmissions,
dans laquelle
les variantes de la gamme comprennent un carter identique pour toutes les variantes, chaque variante étant caractérisée au moins par une unité d'arbre (1) qui est disposée dans le carter à une position identique pour toutes les variantes,
l'unité d'arbre (1) comprenant, dans une première variante, une roue dentée (40) dont la largeur de moyeu est diminuée, par rapport à la largeur de denture, à une première dimension seulement sur une face latérale (42),
et l'unité d'arbre (1) comprenant, dans une autre variante, une roue dentée (30) dont la largeur de denture est diminuée, par rapport à la largeur de moyeu, à une deuxième dimension seulement sur une face latérale (32),
une face latérale (23, 33, 43) de la roue dentée (20, 30, 40) de l'unité d'arbre (1) étant chaque fois réalisée sensiblement sous la forme d'une surface plane dans la première et dans l'autre variante,
la roue dentée (20, 30, 40) avec la face latérale (23, 33, 43) réalisée sous la forme d'une surface plane étant orientée et/ou disposée de la même manière par rapport au carter dans toutes les variantes,
et la largeur de moyeu de l'autre variante étant égale à la première dimension.

7. Gamme de transmissions,
dans laquelle les variantes de la gamme comprennent un carter identique pour toutes les variantes,
dans laquelle chaque variante est caractérisée au moins par une unité d'arbre (1) qui est disposée dans le carter à une position identique pour toutes les variantes,
l'unité d'arbre (1) comprenant, dans une première variante, une roue dentée (40) dont la largeur de moyeu est diminuée, par rapport à la largeur de denture, à une première dimension seulement sur une face latérale (42),
et l'unité d'arbre (1) comprenant, dans une autre variante, une roue dentée (20) dont les faces latérales (22, 23) sont réalisées de manière sensiblement plane,
et une face latérale (23, 33, 43) de la roue dentée (20, 30, 40) de l'unité d'arbre (1) étant chaque fois réalisée sensiblement sous la forme d'une surface plane dans la première et dans l'autre variante,
la roue dentée (20, 30, 40) avec la face latérale (23, 33, 43) réalisée sous la forme d'une surface plane étant orientée et/ou disposée de la même manière par rapport au carter dans toutes les variantes
et un épaulement (7) étant formé sur l'arbre (2) de l'unité d'arbre (1) de chaque variante,
sur lequel la roue dentée (4, 20, 30, 40) de l'unité d'arbre (1) est fixée axialement dans une direction par la face latérale (23, 33, 43) réalisée sensiblement sous la forme d'une surface plane.

8. Gamme de transmissions,
dans laquelle les variantes de la gamme comprennent un carter identique pour toutes les variantes,
dans laquelle chaque variante est caractérisée au moins par une unité d'arbre (1) qui est disposée dans le carter à une position identique pour toutes les variantes,
l'unité d'arbre (1) comprenant, dans une variante, une roue dentée (30) dont la largeur de denture est diminuée, par rapport à la largeur de moyeu, à une dimension seulement sur une face latérale (42),
et l'unité d'arbre (1) comprenant, dans une autre variante, une roue dentée (20) dont les faces latérales (22, 23) sont réalisées de manière sensiblement plane,
et une face latérale (22, 23, 43) de la roue dentée (20, 30, 40) de l'unité d'arbre (1) étant chaque fois réalisée sous la forme d'une surface plane dans les variantes,
la roue dentée (20, 30, 40) avec la face latérale (23, 33, 43) réalisée sous la forme d'une surface plane étant orientée et/ou disposée de la même manière par rapport au carter dans toutes les variantes,
et un épaulement (7) étant formé sur l'arbre (2) de l'unité d'arbre (1) de chaque variante,
sur lequel la roue dentée (4, 20, 30, 40) de l'unité d'arbre (1) est fixée axialement dans une direction par la face latérale (23, 33, 43) réalisée sensiblement sous la forme d'une surface plane.

9. Gamme de transmissions,
dans laquelle les variantes de la gamme comprennent un carter identique pour toutes les variantes,
dans laquelle chaque variante est caractérisée au moins par une unité d'arbre (1) qui est disposée dans le carter à une position identique pour toutes les variantes,
l'unité d'arbre (1) comprenant, dans une première variante, une roue dentée (40) dont la largeur de moyeu est diminuée, par rapport à la largeur de denture, à une première dimension seulement sur une face latérale (42),
l'unité d'arbre (1) comprenant, dans une deuxième variante, une roue dentée (20) dont les faces latérales (22, 23) sont réalisées de manière sensiblement plane, et
l'unité d'arbre (1) comprenant, dans une troisième variante, une roue dentée (30) dont la largeur de denture est diminuée, par rapport à la largeur de moyeu, à une deuxième dimension seulement sur une face latérale (32), et
une face latérale (23, 33, 43) de la roue dentée (20, 30, 40) de l'unité d'arbre (1) étant chaque fois réalisée sensiblement sous la forme d'une surface plane dans la première, la deuxième et la troisième variante,
la roue dentée (20, 30, 40) avec la face latérale (23, 33, 43) réalisée sous la forme d'une surface plane étant orientée et/ou disposée de la même manière par rapport au carter dans toutes les variantes,
et un épaulement (7) étant formé sur l'arbre (2) de l'unité d'arbre (1) de chaque variante,
sur lequel la roue dentée (4, 20, 30, 40) de l'unité d'arbre (1) est fixée axialement dans une direction par la face latérale (23, 33, 43) réalisée sensiblement sous la forme d'une surface plane.

10. Gamme de transmissions selon la revendication 9,
dans laquelle
la roue dentée (40) de l'unité d'arbre (1) de la première variante a un profil axial, le profil axial de la roue dentée (40) présentant un retrait (52) dans la zone du moyeu, de sorte que la largeur de denture au cercle de pied est plus grande que la largeur de moyeu dans la zone de moyeu de la liaison arbre-moyeu
et/ou la roue dentée (30) de l'unité d'arbre de la troisième variante a un profil axial, le profil axial de la roue dentée présentant un retrait (50) dans la zone de la denture, de sorte que la largeur de denture au cercle de pied de la denture est plus petite que la largeur de moyeu.

11. Gamme de transmissions selon une des revendications 6 à 10,
dans laquelle
les largeurs de moyeu des roues dentées (4, 20, 30, 40) des unités d'arbre (1) présentent une première dimension standardisée dans les variantes, en particulier dans laquelle la première dimension s'écarte au maximum de 5 % de la moyenne arithmétique des largeurs de denture des roues dentées (20, 30, 40) des unités d'arbre (1) de la gamme.

12. Gamme de transmissions selon une des revendications 6 à 11,
dans laquelle
les unités d'arbre (1) des variantes comprennent chaque fois une clavette (9) standardisée qui est disposée chaque fois dans une rainure de clavette (8) standardisée, la rainure de clavette (8) étant disposée à la même position axiale de l'arbre (2) de l'unité d'arbre (1) respective dans chaque variante
et la première dimension étant plus grande que la somme des longueurs de clavette et d'une longueur d'une extrémité de rainure de clavette
et/ou la première dimension étant plus petite que la longueur de la rainure de clavette (8).

13. Gamme de transmissions selon une des revendications 6 à 12,
dans laquelle
les différentes variantes de roues dentées (4, 20, 30, 40) sont montées sur un arbre (2) identique pour toutes les variantes.

14. Gamme de transmissions selon une des revendications 6 à 13,
dans laquelle un épaulement (7) est formé sur l'arbre (2) de l'unité d'arbre (1) de chaque variante,
sur lequel la roue dentée (4, 20, 30, 40) de l'unité d'arbre (1) est fixée axialement dans une direction,
l'extrémité de rainure de clavette étant espacée axialement de l'épaulemerit (7) de l'arbre (2).

15. Gamme de transmissions selon une des revendications 6 à 14,
dans laquelle les variantes présentent chaque fois une masse totale d'au moins 1 t et/ou les variantes sont dimensionnées pour des classes de couple d'au moins 50 kNm.
